# EUROPEAN PATENT APPLICATION

(11) **EP 4 332 415 A1**
(43) Date of publication of application: **06.03.2024**
(21) Application number: 22795380.9
(22) Date of filing: 22.03.2022
(51) Int. Cl.: F16J 15/34

(54) **SLIDING COMPONENT**

(30) Priority: 28.04.2021 JP 2021076408
(71) Applicant: Eagle Industry Co., Ltd., Minato-ku Tokyo 105-8587 (JP)
(72) Inventor: UCHIDA Kenta, Tokyo 105-8587 (JP); IMURA Tadatsugu, Tokyo 105-8587 (JP); OU Iwa, Tokyo 105-8587 (JP); FUKUDA Shogo, Tokyo 105-8587 (JP); SUZUKI Hiroshi, Tokyo 105-8587 (JP)
(74) Representative: WSL Patentanwälte Partnerschaft mbB
(86) International application number: PCT/JP2022/013241
(87) International publication number: WO 2022/230460

(57) **Abstract**

Provided is a sliding component capable of reliably generating a positive pressure at a terminating end portion of a dynamic pressure generation groove. In a sliding component 10 which is disposed at a relatively rotating position of a rotating machine, slides relatively to a counterpart sliding component 20, and has a dynamic pressure generation groove 13 provided on a sliding surface 11 to have a starting end portion 13A and a terminating end portion 13B, the dynamic pressure generation groove 13 includes a first groove portion 14 extending circumferentially on the side of the starting end portion 13A and a second groove portion 15 extending circumferentially on the side of the terminating end portion 13B are arranged to be displaced in the circumferential direction and the radial direction, and the first groove portion 14 and the second groove portion 15 communicate with each other through an inclined groove portion 16 obliquely extending from the first groove portion 14 toward a downstream side in a relative rotation direction.

## Description

### {TECHNICAL FIELD}

The present invention relates to a sliding component as one of sliding components that rotate relative to each other and are used for, for example, a shaft sealing device sealing a rotating shaft of a rotating machine in automobiles, general industrial machines, or other seal fields or a bearing of a machine in automobiles, general industrial machines, or other bearing fields.

### {BACKGROUND ART}

As a shaft sealing device that prevents a leakage of a sealed fluid around a rotating shaft in a rotating machine, for example, a mechanical seal including a pair of annular sliding components rotating relative to each other and sliding on their sliding surfaces is known. In such a mechanical seal, in recent years, there has been a desire to reduce the energy lost due to sliding in order to, for example, protect the environment and a positive pressure generation groove is provided on the sliding surface of the sliding component.

For example, in the mechanical seal shown in Patent Citation 1, a plurality of dynamic pressure generation grooves are provided on the sliding surface of one sliding component in the circumferential direction. This dynamic pressure generation groove includes a first groove portion which has a relative rotation upstream starting end portion and extends in the circumferential direction and a second groove portion which has a relative rotation downstream terminating end portion and extends in the circumferential direction. The first groove portion and the second groove portion are radially displaced from each other and the downstream end portion of the first groove portion radially communicates with the upstream end portion of the second groove portion. That is, the dynamic pressure generation groove has a crank shape in the plan view.

When the sliding components rotate relative to each other, the sealed fluid existing in the dynamic pressure generation groove moves toward the terminating end portion and a positive pressure is generated due to the concentration of the sealed fluid at the terminating end portion. Accordingly, the sliding surfaces are separated from each other and a fluid film of the sealed fluid is formed on the sliding surface, so that lubricity is improved and low friction is realized. On the other hand, since a relative negative pressure is generated in the vicinity of the starting end portion of the dynamic pressure generation groove, the sealed fluid flowing out from the sliding surface is sucked into the dynamic pressure generation groove. Accordingly, the leakage of the sealed fluid toward the leakage space can be reduced.

### {CITATION LIST}

### {Patent Literature}

Patent Citation 1: WO 2014/050920 A1 (Page 8, FIG. 2)

### {SUMMARY OF INVENTION}

### {Technical Problem}

In the sliding component of Patent Citation 1, the sealed fluid between the sliding surfaces sucked into the dynamic pressure generation groove due to a relative negative pressure generated at the starting end portion of the dynamic pressure generation groove moves toward the terminating end portion of the dynamic pressure generation groove to generate a positive pressure. However, in the sliding component of Patent Citation 1, since the communication portion connecting the first groove portion and the second groove portion of the dynamic pressure generation groove extends in the radial direction to be substantially orthogonal to the first groove portion and the second groove portion, a corner portion forming a substantially right angle in plan view is formed at the boundary portion between the first groove portion and the communication portion and the boundary portion between the second groove portion and the communication portion and vortices are more likely to occur near this corner portion. Accordingly, the sealed fluid sucked into the dynamic pressure generation groove is less likely to move toward the terminating end portion and the sealed fluid supplied to the terminating end portion of the dynamic pressure generation groove becomes insufficient. As a result, there is concern that a positive pressure is not easily generated.

The present invention has been made in view of such problems and an object thereof is to provide a sliding component capable of reliably generating a positive pressure at a terminating end portion of a dynamic pressure generation groove.

### {Solution to Problem}

In order to solve the foregoing problem, a sliding component according to a first aspect of the present invention is a sliding component which is disposed at a relatively rotating position of a rotating machine, slides relatively to a counterpart sliding component, and has a dynamic pressure generation groove provided on a sliding surface thereof, the dynamic pressure generation groove having a starting end portion and a terminating end portion opposed to each other in a circumferential direction, wherein the dynamic pressure generation groove includes a first groove portion extending circumferentially on a side of the starting end portion and a second groove portion extending circumferentially on a side of the terminating end portion, the first groove portion and the second groove portion being arranged to be displaced in the circumferential direction and a radial direction, and wherein the first groove portion and the second groove portion communicate with each other through an inclined groove portion obliquely extending from the first groove portion toward a downstream side in a relative rotation direction. According to the aforesaid features of the present invention, since the sealed fluid collected in the first groove portion on the starting end portion side smoothly moves along the inclined groove portion obliquely extending toward the downstream side in the relative rotation direction to be introduced into the second groove portion during the relative rotation of the sliding components, a positive pressure can be reliably generated at the terminating end portion of the dynamic pressure generation groove.

It may be preferable that a relative rotation downstream end portion of the first groove portion and a relative rotation upstream end portion of the second groove portion communicate with each other through the inclined groove portion. According to this preferable configuration, the sealed fluid can be smoothly moved without stagnation at the communication portion between the first groove portion and the inclined groove portion and the communication portion between the second groove portion and the inclined groove portion.

It may be preferable that the inclined groove portion is deeper than the second groove portion. According to this preferable configuration, a shortage of the sealed fluid supplied from the inclined groove portion to the first groove portion can be suppressed. Further, cavitation is less likely to occur in the first groove portion.

It may be preferable that the sliding component includes a fluid introduction groove portion which causes the second groove portion and a sealed fluid space to communicate with each other. According to this preferable configuration, since the sealed fluid is introduced from the inclined groove portion to the second groove portion and is also introduced from the sealed fluid space through the fluid introduction groove portion, a sufficient positive pressure can be generated at the terminating end portion of the dynamic pressure generation groove.

It may be preferable that the second groove portion communicates with a side wall surface of a downstream end portion of the inclined groove portion, and the fluid introduction groove portion communicates with an end wall surface of the downstream end portion of the inclined groove portion. According to this preferable configuration, since it is possible to ensure a large communication area between the inclined groove portion and the second groove portion, the flow of the sealed fluid flowing from the inclined groove portion toward the second groove portion is suppressed from being distributed by the flow of the sealed fluid introduced from the fluid introduction groove portion into the inclined groove portion.

It may be preferable that the fluid introduction groove portion is inclined toward the downstream side in the relative rotation direction. According to this preferable configuration, an excessive introduction of the sealed fluid from the sealed fluid space into the inclined groove portion through the fluid introduction groove portion can be suppressed and the disturbance of the flow of the sealed fluid introduced from the inclined groove portion into the second groove portion can be avoided.

It may be preferable that the fluid introduction groove portion is deeper than the inclined groove portion. According to this preferable configuration, since the inclined groove portion is shallower than the fluid introduction groove portion, the shear force of the sliding surface is more likely to act on the sealed fluid in the inclined groove portion than the sealed fluid in the fluid introduction groove portion and the sealed fluid preferentially flows from the inclined groove portion into the second groove portion.

It may be preferable that a plurality of the dynamic pressure generation grooves are provided, the first groove portion of each of the dynamic pressure generation grooves is disposed to radially overlap on a leakage space side of the terminating end portion of adjacent dynamic pressure generation groove on an upstream side in the relative rotation direction. According to this preferable configuration, the sealed fluid moving from the terminating end portion of the other dynamic pressure generation groove toward the leakage space is easily collected in the first groove portion of one dynamic pressure generation groove.

### {BRIEF DESCRIPTION OF DRAWINGS}

FIG. 1 is a vertical cross-sectional view illustrating an example of a mechanical seal including a sliding component according to a first embodiment of the present invention.
FIG. 2 is a view in which a sliding surface of a stationary seal ring in the first embodiment is viewed from the axial direction.
FIG. 3 is an enlarged view in which the sliding surface of the stationary seal ring in the first embodiment is viewed from the axial direction.
FIG. 4A is a cross-sectional view taken along a line A-A of FIG. 3, FIG. 4B is a cross-sectional view taken along a line B-B, and FIG. 4C is a cross-sectional view taken along a line C-C.
FIG. 5 is an enlarged view in which a sliding surface of a stationary seal ring as a sliding component according to a second embodiment of the present invention is viewed from the axial direction.
FIG. 6 is an enlarged view in which a sliding surface of a stationary seal ring as a sliding component according to a third embodiment of the present invention is viewed from the axial direction.
FIG. 7 is an enlarged view in which a sliding surface of a stationary seal ring as a sliding component according to a fourth embodiment of the present invention is viewed from the axial direction.
FIG. 8 is an enlarged view in which a sliding surface of a stationary seal ring as a sliding component according to a fifth embodiment of the present invention is viewed from the axial direction.
FIG. 9A is a cross-sectional view taken along a line D-D of FIG. 8 and FIG. 9B is a cross-sectional view taken along a line E-E.
FIG. 10 is an enlarged view in which a sliding surface of a stationary seal ring as a sliding component according to a sixth embodiment of the present invention is viewed from the axial direction.
FIG. 11 is a view in which a sliding surface of a stationary seal ring of Modified Example 1-1 of the first embodiment is viewed from the axial direction.
FIG. 12 is a view in which a sliding surface of a stationary seal ring of Modified Example 1-2 of the first embodiment is viewed from the axial direction.

### {DESCRIPTION OF EMBODIMENTS}

Modes for carrying out a sliding component according to the present invention will be described on the basis of the embodiments.

### {First embodiment}

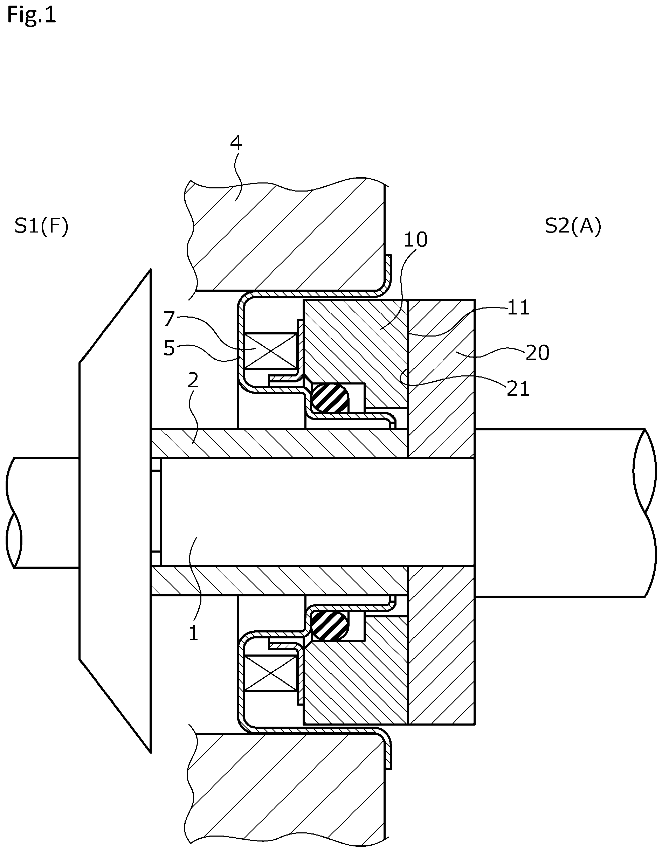

A sliding component according to a first embodiment of the present invention will be described with reference to FIGS. 1 to 4. Additionally, in this embodiment, a description will be made on the assumption that a sealed fluid F exists in an inner space S1 of a mechanical seal, an atmosphere A exists in an outer space S2, an inner radial side of a sliding component constituting the mechanical seal is a sealed fluid space side (high pressure side), and an outer radial side is a leakage space side (low pressure side). Further, for convenience of description, dots may be added to grooves formed on a sliding surface in the drawings.

A mechanical seal for an automobile illustrated in FIG. 1 is of an outside mechanical seal that seals the sealed fluid F in the inner space S1 that is about to leak from the inner radial side toward the outer radial side of the sliding surface and allows the outer space S2 to communicate with the atmosphere A. Additionally, in this embodiment, a case is exemplified in which the sealed fluid F is a high-pressure liquid and the atmosphere A is a gas having a pressure lower than that of the sealed fluid F.

The mechanical seal mainly includes a rotating seal ring 20 which serves as another annular sliding component provided in a rotating shaft 1 through a sleeve 2 to be rotatable together with a rotating shaft 1 and an annular stationary seal ring 10 which serves as a sliding component provided in a seal cover 5 fixed to a housing 4 of a mounted device not to be rotatable and to be axially movable and when the stationary seal ring 10 is axially biased by the elastic member 7, a sliding surface 11 of the stationary seal ring 10 and a sliding surface 21 of the rotating seal ring 20 are configured to slide closely against each other. Additionally, the sliding surface 21 of the rotating seal ring 20 is a flat surface and this flat surface is not provided with recesses such as grooves.

The stationary seal ring 10 and the rotating seal ring 20 are typically formed of SiC (as an example of hard material) or a combination of SiC and carbon (as an example of soft material). However, any sliding material can be applied insofar as it is used as a sliding material for a mechanical seal. Additionally, the SiC includes a sintered body using boron, aluminum, carbon, or the like as a sintering aid and a material made of two or more types of phases having different components and compositions, examples of which include SiC in which graphite particles are dispersed, reaction-sintered SiC made of SiC and Si, SiC-TiC, and SiC-TiN. As the carbon, resin-molded carbon, sintered carbon, and the like can be used, including carbon in which carbon and graphite are mixed. In addition to the above sliding materials, a metal material, a resin material, a surface modification material (e.g., coating material), a composite material, and the like can also be applied.

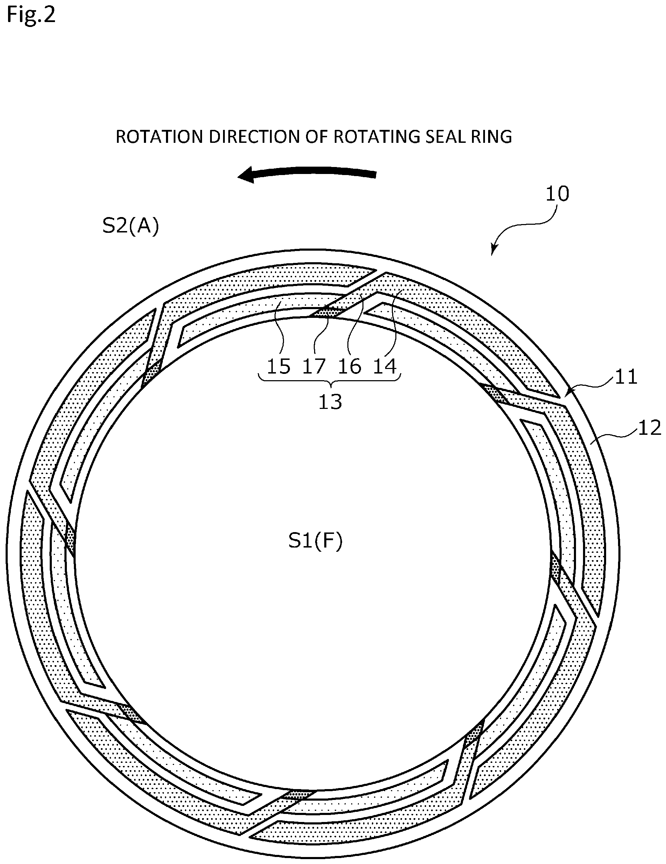

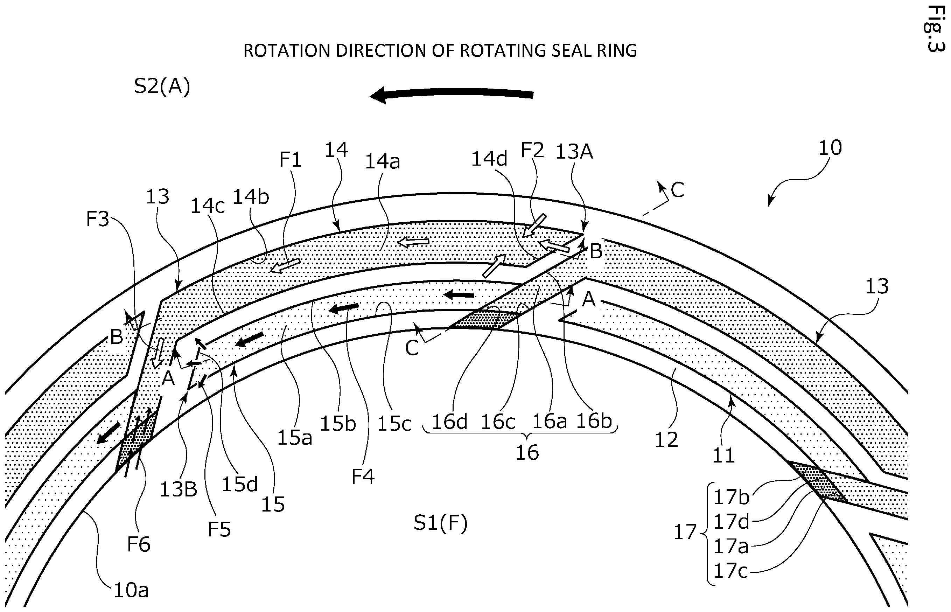

As illustrated in FIGS. 2 and 3, the rotating seal ring 20 slides counterclockwise relative to the stationary seal ring 10 as indicated by a solid arrow.

A plurality of dynamic pressure generation grooves 13 (eight grooves in this embodiment) are equally arranged in the circumferential direction on the sliding surface 11 of the stationary seal ring 10.

Further, a portion other than the dynamic pressure generation groove 13 of the sliding surface 11 is a land 12 forming a flat surface. Specifically, the land 12 includes a land portion between the dynamic pressure generation grooves 13 adjacent to each other in the circumferential direction and a land portion on the outer radial side of the dynamic pressure generation groove 13 and these land portions are arranged on the same plane to form the flat surface of the land 12. Further, the land portion on the outer radial side of the dynamic pressure generation groove 13 has an annular shape without any interruption in the circumferential direction.

The dynamic pressure generation groove 13 mainly includes a fluid collection groove portion 14 which is a first groove portion, a positive pressure generation groove portion 15 which is a second groove portion, an inclined groove portion 16 which allows the positive pressure generation groove portion 15 and the fluid collection groove portion 14 to communicate with each other, and a fluid introduction groove portion 17 which allows the inclined groove portion 16 and the inner space S1 to communicate with each other.

As illustrated in FIG. 3, the fluid collection groove portion 14 extends concentrically with the stationary seal ring 10 in the circumferential direction.

Specifically, the fluid collection groove portion 14 mainly includes a bottom surface 14a which extends in the circumferential direction in parallel to the flat surface of the land 12, side wall surfaces 14b and 14c which rise from both radial end edges of the bottom surface 14a toward the flat surface of the land 12, and a starting end wall surface 14d which rises from the circumferential end edge on the upstream side of the bottom surface 14a in the relative rotation direction toward the flat surface of the land 12 and is continuous to the side wall surfaces 14b and 14c. Hereinafter, a portion near the starting end wall surface 14d in the fluid collection groove portion 14 is referred to as a starting end portion 13A of the dynamic pressure generation groove 13. The starting end portion 13A has a closed shape and is surrounded by the land 12.

The positive pressure generation groove portion 15 extends in the circumferential direction concentrically with the stationary seal ring 10 at a position displaced to the relative rotation downstream side and the inner radial side relative to the fluid collection groove portion 14.

Specifically, the positive pressure generation groove portion 15 mainly includes a bottom surface 15a which extends in the circumferential direction in parallel to the flat surface of the land 12, side wall surfaces 15b and 15c which rise from both radial end edges of the bottom surface 15a toward the flat surface of the land 12, and a terminating end wall surface 15d which rises from the circumferential end edge on the downstream side of the bottom surface 15a in the relative rotation direction toward the flat surface of the land 12 and is continuous to the side wall surfaces 15b and 15c. Hereinafter, a portion near the terminating end wall surface 15d in the positive pressure generation groove portion 15 is referred to as a terminating end portion 13B of the dynamic pressure generation groove 13. The terminating end portion 13B has a closed shape and is surrounded by the land 12.

The inclined groove portion 16 obliquely extends in a linear shape from the fluid collection groove portion 14 between the fluid collection groove portion 14 and the positive pressure generation groove portion 15 toward the downstream side in the relative rotation direction and allows the fluid collection groove portion 14 and the positive pressure generation groove portion 15 to communicate with each other.

Specifically, the inclined groove portion 16 mainly includes a bottom surface 16a which extends in parallel to the flat surface of the land 12 and side wall surfaces 16b and 16c which rise from both circumferential end edges of the bottom surface 16a toward the flat surface of the land 12. The outer radial end edge portion of the bottom surface 16a overlaps the relative rotation downstream end portion of the fluid collection groove portion 14.

The side wall surface 14b on the outer radial side of the fluid collection groove portion 14 is continuous to the upstream end portion of the side wall surface 16b, that is, the outer radial side of the side wall surface 16b disposed on the downstream side in the relative rotation direction of the inclined groove portion 16.

The side wall surface 14c on the inner radial side of the fluid collection groove portion 14 is continuous to the upstream end portion of the side wall surface 16c, that is, the outer radial side of the side wall surface 16c disposed on the upstream side in the relative rotation direction of the inclined groove portion 16.

The relative rotation downstream end portion of the fluid collection groove portion 14 communicates with the relative rotation upstream end portion of the inclined groove portion 16.

The side wall surface 15b on the outer radial side of the positive pressure generation groove portion 15 is continuous to the downstream end portion of the side wall surface 16b, that is, the inner radial side of the side wall surface 16b of the inclined groove portion 16.

The side wall surface 15c on the inner radial side of the positive pressure generation groove portion 15 rising toward the land 12 is continuous to an inner radial end edge 16d of the inclined groove portion 16 in a concentric arc shape and a step shape in the depth direction.

The relative rotation upstream end portion of the positive pressure generation groove portion 15 communicates with the relative rotation downstream end portion of the inclined groove portion 16.

The fluid introduction groove portion 17 communicates with the inner radial end edge 16d of the bottom surface 16a of the inclined groove portion 16, that is, the end wall surface of the downstream end portion of the inclined groove portion 16 and extends from the inner radial end edge 16d to the inner peripheral surface 10a of the stationary seal ring 10.

Specifically, the fluid introduction groove portion 17 mainly includes a bottom surface 17a which extends in parallel to the flat surface of the land 12, side wall surfaces 17b and 17c which rise from both circumferential end edges of the bottom surface 17a toward the flat surface of the land 12, and an end wall surface 17d which rises from the outer radial end edge of the bottom surface 17a to the inner radial end edge 16d and is continuous to the side wall surfaces 17b and 17c.

The side wall surface 17b is continuous to the side wall surface 16b of the inclined groove portion 16 on the same plane and the side wall surface 17c is continuous to the side wall surface 16c of the inclined groove portion 16 on the same plane. That is, the fluid introduction groove portion 17 obliquely extends along the inclination of the inclined groove portion 16 from the inner radial end edge 16d toward the downstream side in the relative rotation direction.

Further, the fluid collection groove portion 14 of one dynamic pressure generation groove 13 is disposed to radially overlap on the outer radial side of the terminating end portion 13B of the other dynamic pressure generation groove 13 adjacent to the relative rotation upstream side. Further, the starting end wall surface 14d of the fluid collection groove portion 14 of the dynamic pressure generation groove 13 is disposed near the side wall surface 16b of the inclined groove portion 16 of the dynamic pressure generation groove 13. The fluid collection groove portion 14 of the dynamic pressure generation groove 13 and the positive pressure generation groove portion 15 of the dynamic pressure generation groove 13 radially overlap over a wide range of a length equal to or longer than half the length in the circumferential direction.

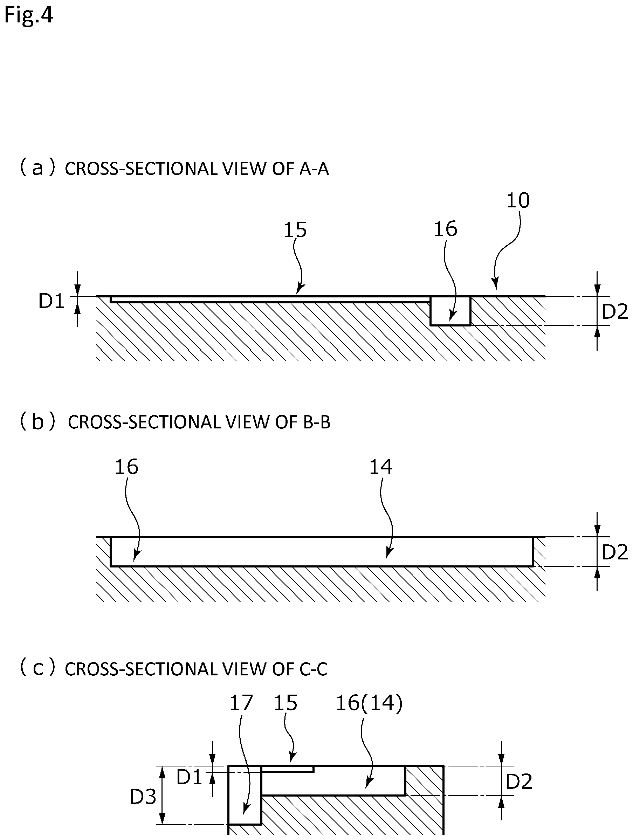

Next, the depth relationship of each portion of the dynamic pressure generation groove 13 will be described with reference to FIG. 4. Additionally, FIGS. 4A and 4B show a cross-section cut along the fluid collection groove portion 14 and the positive pressure generation groove portion 15 forming an arc shape and FIG. 4C shows a cross-section cut in parallel to the side wall surface 16b of the inclined groove portion 16 and the side wall surface 17b of the fluid introduction groove portion 17.

The positive pressure generation groove portion 15 has a constant depth D1 as illustrated in FIG. 4A and the inclined groove portion 16 has a constant depth D2 as illustrated in FIGS. 4A and 4B.

The depth D2 of the inclined groove portion 16 is deeper than the depth D1 of the positive pressure generation groove portion 15 (D1<D2). For example, the depth D2 of the inclined groove portion 16 is approximately 3 to 5 times the depth D1 of the positive pressure generation groove portion 15.

Further, as illustrated in FIG. 4B, the fluid collection groove portion 14 has a constant depth D2 which is the same as the depth D2 of the inclined groove portion 16.

Further, as illustrated in FIG. 4C, the fluid introduction groove portion 17 has a constant depth D3. The depth D3 of the fluid introduction groove portion 17 is deeper than the depth D2 of the inclined groove portion 16 (D2<D3). For example, the depth D3 of the fluid introduction groove portion 17 is about 1.5 times to 2 times the depth D2 of the inclined groove portion 16, that is, 4.5 times to 10 times the depth D1 of the positive pressure generation groove portion 15.

Next, an operation during the relative rotation of the stationary seal ring 10 and the rotating seal ring 20 will be described with reference to FIG. 3. Additionally, in order to easily describe the flow of the sealed fluid F of FIG. 3, the flow on the upstream side of the dynamic pressure generation groove 13 is indicated by white thick arrows F1 to F3, the flow on the downstream side of the dynamic pressure generation groove 13 is indicated by black thick arrows F4 and F5, and the flow introduced from the inner space S1 into the dynamic pressure generation groove 13 is indicated by a black thin arrow F6.

First, the sealed fluid F flows into the dynamic pressure generation groove 13 in a stop state in which the rotating seal ring 20 does not rotate. Additionally, since the stationary seal ring 10 is biased toward the rotating seal ring 20 by the elastic member 7, the sliding surfaces 11 and 21 contact each other and almost no sealed fluid F between the sliding surfaces 11 and 21 leaks into the outer space S2.

As illustrated in FIG. 3, when the rotating seal ring 20 rotates relative to the stationary seal ring 10, the sealed fluid F in the dynamic pressure generation groove 13 moves along the rotation direction of the rotating seal ring 20 due to shearing with the sliding surface 21.

Specifically, in the fluid collection groove portion 14, the sealed fluid F moves from the starting end portion 13A toward the inclined groove portion 16 as indicated by the arrow F1. Accordingly, the fluid pressure of the starting end portion 13A is relatively lower than the peripheral fluid pressure. In other words, a relative negative pressure is generated at the starting end portion 13A and the sealed fluid F between the sliding surfaces 11 and 21 near the starting end portion 13A is sucked into the fluid collection groove portion 14 as indicated by the arrow F2.

Further, in the inclined groove portion 16, the sealed fluid F moves from the outer radial side toward the positive pressure generation groove portion 15 on the inner radial side as indicated by the arrow F3. Since the depth D2 of the inclined groove portion 16 is deeper than the depth D1 of the positive pressure generation groove portion 15, a large amount of the sealed fluid F can be held in the inclined groove portion 16 and a shortage of the sealed fluid F supplied to the positive pressure generation groove portion 15 can be suppressed.

Further, in the positive pressure generation groove portion 15, the sealed fluid F moves from the inclined groove portion 16 toward the terminating end portion 13B as indicated by the arrow F4. The sealed fluid F having moved toward the terminating end portion 13B can increase the pressure at the terminating end portion 13B and in the vicinity thereof. That is, a positive pressure is generated at the terminating end portion 13B of the dynamic pressure generation groove 13 and in the vicinity thereof.

Since the depth D1 of the positive pressure generation groove portion 15 is shallow, a positive pressure is generated at the terminating end portion 13B of the dynamic pressure generation groove 13 and in the vicinity thereof even when the movement amount of the sealed fluid F is small compared to the low rotation speed of the rotating seal ring 20.

Further, the sliding surfaces 11 and 21 are slightly separated from each other (not illustrated) due to the positive pressure generated at the terminating end portion 13B of the dynamic pressure generation groove 13 and in the vicinity thereof. Accordingly, the sealed fluid F in the dynamic pressure generation groove 13 mainly flows between the sliding surfaces 11 and 21 as indicated by the arrow F5. In this way, since the sealed fluid F is interposed between the sliding surfaces 11 and 21, lubricity is improved and wear between the sliding surfaces 11 and 21 can be suppressed. Additionally, since the floating distance between the sliding surfaces 11 and 21 is small, the amount of the sealed fluid F flowing out from the dynamic pressure generation groove 13 between the sliding surfaces 11 and 21 is small. On the other hand, since the sealed fluid is collected by the fluid collection groove portion 14 even when the sealed fluid flows out between the sliding surfaces 11 and 21, almost no sealed fluid leaks into the outer space S2.

Further, in the fluid introduction groove portion 17, the sealed fluid F moves from the inner space S1 toward the inclined groove portion 16 as indicated by the arrow F6. Since the depth D3 of the fluid introduction groove portion 17 is deeper than the depth D1 of the positive pressure generation groove portion 15 and the depth D2 of the inclined groove portion 16, a large amount of the sealed fluid F can be held and a shortage of the sealed fluid F supplied to the positive pressure generation groove portion 15 can be suppressed.

Further, the shear force of the sliding surface 21 is less likely to act on the sealed fluid F in the fluid introduction groove portion 17 than the sealed fluid F in the positive pressure generation groove portion 15 and the inclined groove portion 16 and the sealed fluid F is more likely to flow to the positive pressure generation groove portion 15 from the inclined groove portion 16 than from the fluid introduction groove portion 17. Therefore, the sealed fluid F smoothly flows from the inclined groove portion 16 toward the positive pressure generation groove portion 15.

As described above, the fluid collection groove portion 14 and the positive pressure generation groove portion 15 communicate with each other by the inclined groove portion 16 obliquely extending from the fluid collection groove portion 14 toward the downstream side in the relative rotation direction. Accordingly, since the sealed fluid F collected in the fluid collection groove portion 14 on the side of the starting end portion 13A smoothly moves along the inclined groove portion 16 obliquely extending toward the downstream side in the relative rotation direction to be introduced into the positive pressure generation groove portion 15 during the relative rotation of the stationary seal ring 10 and the rotating seal ring 20, a positive pressure can be reliably generated at the terminating end portion 13B of the dynamic pressure generation groove 13.

Further, the relative rotation downstream end portion of the fluid collection groove portion 14 and the relative rotation upstream end portion of the positive pressure generation groove portion 15 communicate with each other by the inclined groove portion 16. Accordingly, the sealed fluid F can be smoothly moved without stagnation in the communication portion between the fluid collection groove portion 14 and the inclined groove portion 16 and the communication portion between the positive pressure generation groove portion 15 and the inclined groove portion 16.

Further, since the depth D2 of the inclined groove portion 16 is deeper than the depth D1 of the positive pressure generation groove portion 15 and a large amount of the sealed fluid F can be held in the inclined groove portion 16, a shortage of the sealed fluid F supplied to the positive pressure generation groove portion 15 can be suppressed. Further, since the sealed fluid F in the inclined groove portion 16 is not depleted by the relative rotation, cavitation is less likely to occur in the positive pressure generation groove portion 15.

Further, the fluid introduction groove portion 17 is provided so that the positive pressure generation groove portion 15 and the inner space S1 communicate with each other. Accordingly, since the sealed fluid F is introduced from the inclined groove portion 16 to the positive pressure generation groove portion 15 and the sealed fluid F is also introduced from the inner space S1 through the fluid introduction groove portion 17, a sufficient positive pressure can be generated at the terminating end portion 13B of the dynamic pressure generation groove 13.

Further, the positive pressure generation groove portion 15 communicates with the side wall surface 16b of the downstream end portion of the inclined groove portion 16 and the fluid introduction groove portion 17 communicates with the inner radial end edge 16d of the inclined groove portion 16. Accordingly, since it is possible to ensure a large communication area between the inclined groove portion 16 and the positive pressure generation groove portion 15, the flow of the sealed fluid F flowing from the inclined groove portion 16 toward the positive pressure generation groove portion 15 is suppressed from being distributed by the flow of the sealed fluid F introduced from the fluid introduction groove portion 17 into the inclined groove portion 16.

Further, since the fluid introduction groove portion 17 is inclined toward the downstream side in the relative rotation direction, that is, the opening on the side of the inner space S1 of the fluid introduction groove portion 17 faces the downstream side in the relative rotation direction, an excessive introduction of the sealed fluid F from the inner space S1 into the inclined groove portion 16 through the fluid introduction groove portion 17 can be suppressed and the disturbance of the flow of the sealed fluid F introduced from the inclined groove portion 16 into the positive pressure generation groove portion 15 can be avoided.

Further, since the depth D3 of the fluid introduction groove portion 17 is deeper than the depth D2 of the inclined groove portion 16, the shear force of the sliding surface 21 is less likely to act on the sealed fluid F in the fluid introduction groove portion 17 than the sealed fluid F in the inclined groove portion 16 and the sealed fluid is more likely to flow to the positive pressure generation groove portion 15 from the inclined groove portion 16 than from the fluid introduction groove portion 17. That is, since the flow of the sealed fluid F introduced from the inclined groove portion 16 into the positive pressure generation groove portion 15 can be suppressed from being distributed by the flow of the sealed fluid F flowing from the fluid introduction groove portion 17 to the inclined groove portion 16, the sealed fluid F smoothly flows from the inclined groove portion 16 toward the positive pressure generation groove portion 15.

Further, since the fluid collection groove portion 14 of one dynamic pressure generation groove 13 is disposed to radially overlap on the outer radial side of the terminating end portion 13B of the other dynamic pressure generation groove 13 adjacent to the relative rotation upstream side, the sealed fluid F moving from the terminating end portion 13B of the other dynamic pressure generation groove 13 toward the outer space S2 is easily collected in the fluid collection groove portion 14 of one dynamic pressure generation groove 13.

Further, since the starting end wall surface 14d of the fluid collection groove portion 14 of the dynamic pressure generation groove 13 is disposed near the side wall surface 16b of the inclined groove portion 16 of the dynamic pressure generation groove 13', the fluid collection groove portion 14 of the dynamic pressure generation groove 13 and the positive pressure generation groove portion 15 of the dynamic pressure generation groove 13 radially overlap over a wide range of a length equal to or longer than half the length in the circumferential direction and the sealed fluid F moving from the terminating end portion 13B of the dynamic pressure generation groove 13 toward the outer space S2 can be reliably collected in the fluid collection groove portion 14 of one dynamic pressure generation groove 13.

Further, the inner space S1 on the inner radial side is the sealed fluid space, the outer space S2 on the outer radial side is the leakage space, and the fluid collection groove portion 14 is disposed on the outer radial side of the positive pressure generation groove portion 15. The fluid collection groove portion 14 is formed to be longer than the positive pressure generation groove portion 15 in the circumferential direction and the sealed fluid F is easily collected in the fluid collection groove portion 14.

Further, in the first embodiment, although an embodiment has been exemplified in which the relative rotation downstream end portion of the fluid collection groove portion 14 communicates with the relative rotation upstream end portion of the positive pressure generation groove portion 15 by the inclined groove portion 16, but the present invention is not limited thereto. For example, a part of the fluid collection groove portion 14 may extend to the relative rotation downstream side in relation to the inclined groove portion 16. Further, a part of the positive pressure generation groove portion 15 may extend to the relative rotation upstream side in relation to the inclined groove portion 16. Further, a part of the inclined groove portion 16 may extend to the outer radial side of the fluid collection groove portion 14 or the inner radial side of the positive pressure generation groove portion 15.

Further, in the first embodiment, although an embodiment has been exemplified in which the inclined groove portion 16 extends in a linear shape between the fluid collection groove portion 14 and the positive pressure generation groove portion 15, the inclined groove portion may extend curvedly between the fluid collection groove portion 14 and the positive pressure generation groove portion 15.

Further, in the first embodiment, although an embodiment has been exemplified in which the depth D2 of the fluid collection groove portion 14 is constant, for example, the fluid collection groove portion 14 may be shallower or deeper toward the inclined groove portion 16. Additionally, the fluid collection groove portion 14 may be gradually shallower or deeper like an inclined surface or may be shallower or deeper like a step.

Further, in the first embodiment, although an embodiment has been exemplified in which the depth D2 of the inclined groove portion 16 is constant, for example, the inclined groove portion 16 may be shallower or deeper from the outer diameter toward the inner diameter. Additionally, the inclined groove portion 16 may be gradually shallower or deeper like an inclined surface or may be shallower or deeper like a step.

Further, in the first embodiment, although an embodiment has been exemplified in which the depth D3 of the fluid introduction groove portion 17 is constant, for example, the fluid introduction groove portion 17 may be shallower or deeper toward the inclined groove portion 16. Additionally, the fluid introduction groove portion 17 may be gradually shallower or deeper like an inclined surface or may be shallower or deeper like a step.

Further, in the first embodiment, although an embodiment has been exemplified in which the depth D1 of the positive pressure generation groove portion 15 is constant, for example, the positive pressure generation groove portion 15 may be shallower toward the terminating end portion 13B. In addition, the positive pressure generation groove portion 15 may be gradually shallower like an inclined surface or may be shallower like a step.

### {Second embodiment}

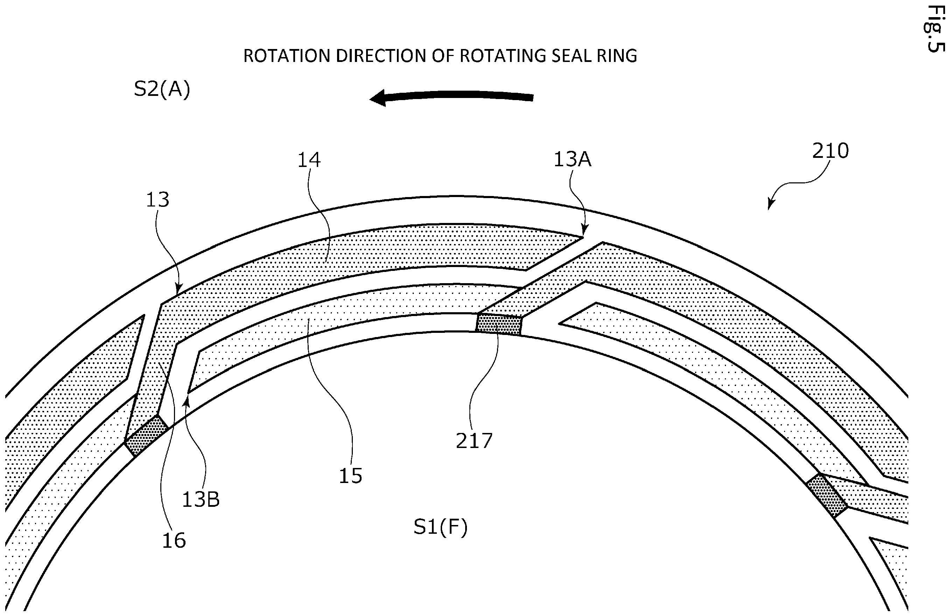

Next, a sliding component according to a second embodiment of the present invention will be described with reference to FIG. 5. Additionally, descriptions of configurations that are the same as those of the first embodiment are omitted.

As illustrated in FIG. 5, a stationary seal ring 210 of the second embodiment is different from that of the first embodiment in that a fluid introduction groove portion 217 extends in the radial direction and the other points are the same as those of the first embodiment.

In the stationary seal ring 210 of the second embodiment, the fluid introduction groove portion 217 extends in the radial direction. That is, since the opening on the side of the inner space S1 of the fluid introduction groove portion 217 faces the center of the stationary seal ring 210, the sealed fluid F is easily introduced from the inner space S1 into the dynamic pressure generation groove 13 (that is, the inclined groove portion 16) through the fluid introduction groove portion 217 compared to the first embodiment, so that a high positive pressure is generated at the terminating end portion 13B.

### {Third embodiment}

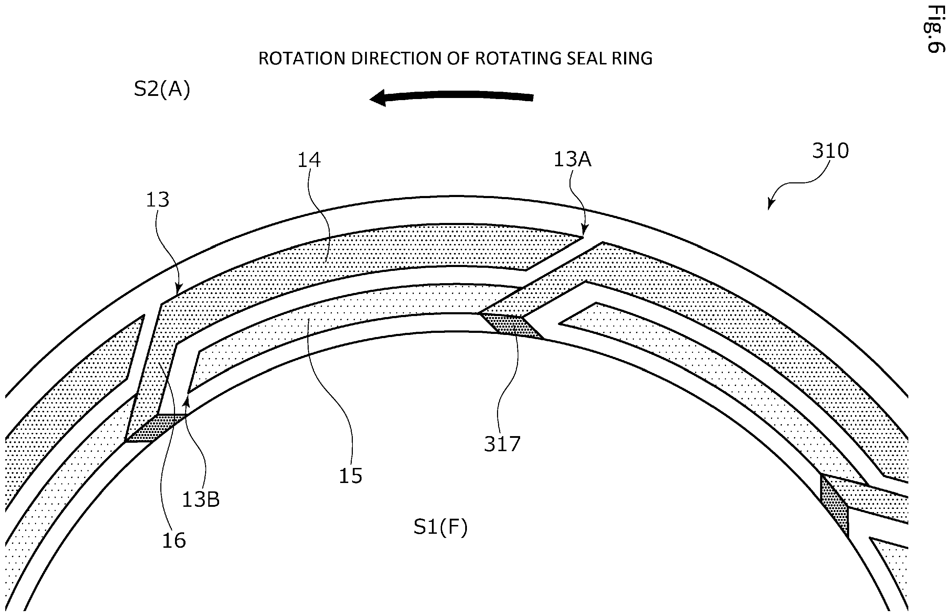

Next, a sliding component according to a third embodiment of the present invention will be described with reference to FIG. 6. Additionally, descriptions of configurations that are the same as those of the first and second embodiments are omitted.

As illustrated in FIG. 6, a stationary seal ring 310 of the third embodiment is different from those of the first and second embodiments in that a fluid introduction groove portion 317 is inclined toward the upstream side in the relative rotation direction and the other points are the same those of the first and second embodiments.

In the stationary seal ring 310 of the third embodiment, the fluid introduction groove portion 317 is inclined toward the upstream side in the relative rotation direction. That is, since the opening on the side of the inner space S1 of the fluid introduction groove portion 317 faces the upstream side in the relative rotation direction, the sealed fluid F is easily introduced from the inner space S1 into the dynamic pressure generation groove 13 (that is, the inclined groove portion 16) through the fluid introduction groove portion 317 compared to the first and second embodiments, so that a high positive pressure is generated at the terminating end portion 13B.

### {Fourth embodiment}

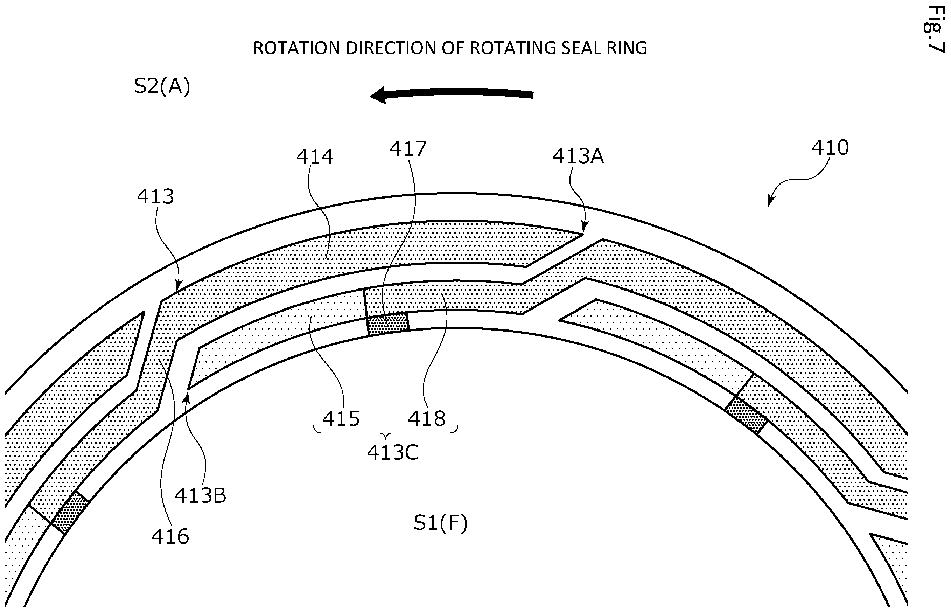

Next, a sliding component according to a fourth embodiment of the present invention will be described with reference to FIG. 7. Additionally, descriptions of configurations that are the same as those of the first embodiment are omitted.

As illustrated in FIG. 7, a dynamic pressure generation groove 413 of a stationary seal ring 410 of the fourth embodiment mainly includes a fluid collection groove portion 414 which serves as a first groove portion extending in the circumferential direction on the side of a starting end portion 413A, a second groove portion 413C which extends in the circumferential direction on the side of a terminating end portion 413B, an inclined groove portion 416 which allows the fluid collection groove portion 414 and the second groove portion 413C to communicate with each other, and a fluid introduction groove portion 417 which allows the second groove portion 413C and the inner space S1 to communicate with each other.

The second groove portion 413C includes a deep groove portion 418 which extends from the end portion on the inner radial side of the inclined groove portion 416 toward the downstream side in the relative rotation direction and has the same depth as that of the inclined groove portion 416 and a positive pressure generation groove portion 415 which extends from the deep groove portion 418 toward the downstream side in the relative rotation direction and is shallower than the deep groove portion 418. The fluid introduction groove portion 417 extends from the downstream end portion of the deep groove portion 418 in the relative rotation direction toward the inner space S1 in the radial direction.

Since the fluid collection groove portion 414 and the second groove portion 413C communicate with each other by the inclined groove portion 416 obliquely extending from the fluid collection groove portion 414 toward the downstream side in the relative rotation direction, the sealed fluid F collected in the fluid collection groove portion 414 smoothly moves along the inclined groove portion 16 to the deep groove portion 418 and is smoothly introduced to the positive pressure generation groove portion 415.

### {Fifth embodiment}

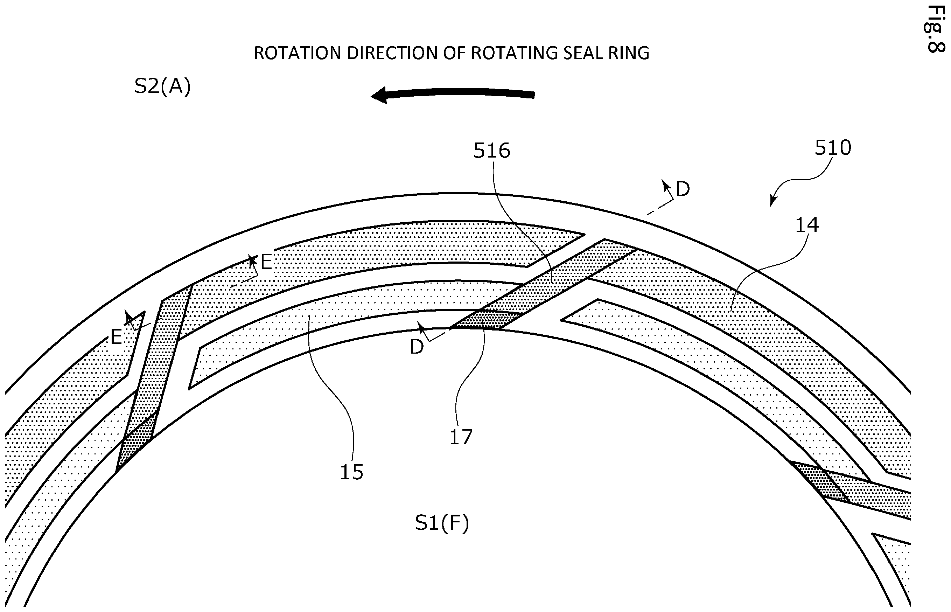

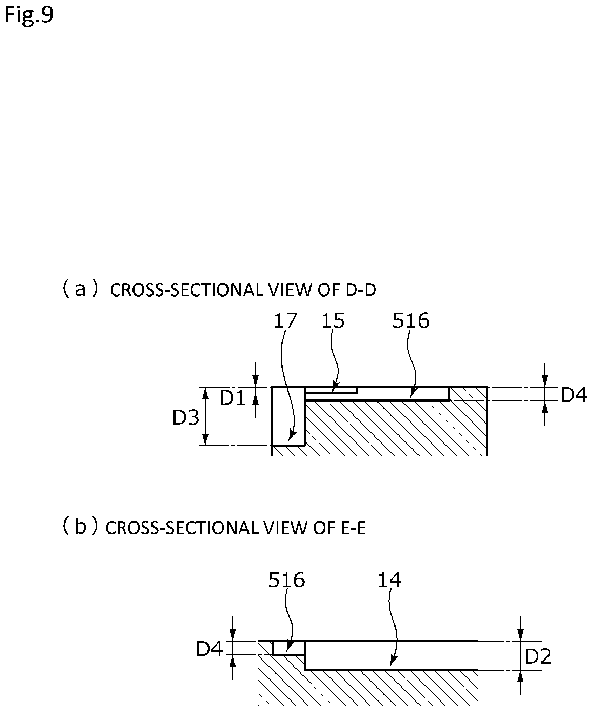

Next, a sliding component according to a fifth embodiment of the present invention will be described with reference to FIGS. 8 and 9. Additionally, descriptions of configurations that are the same as those of the first embodiment are omitted.

As illustrated in FIGS. 8 and 9, a stationary seal ring 510 of the fifth embodiment is different from that of the first embodiment in the depth of the inclined groove portion 516 and the other points are the same as those of the first embodiment.

The inclined groove portion 516 of the stationary seal ring 510 of the fifth embodiment has a constant depth D4. The depth D4 of the inclined groove portion 516 is deeper than the depth D1 of the positive pressure generation groove portion 15 and is shallower than the depth D2 of the fluid collection groove portion 14 and the depth D3 of the fluid introduction groove portion 17 (D1<D4<D2<D3).

For example, the depth D4 of the inclined groove portion 516 is about 2 times to 3 times the depth D1 of the positive pressure generation groove portion 15. Further, the depth D4 of the inclined groove portion 516 is about 1/2 to 1/3 times the depth D2 of the fluid collection groove portion 14.

Since the depth D4 of the inclined groove portion 516 is deeper than the depth D1 of the positive pressure generation groove portion 15, a shortage of the sealed fluid F supplied to the positive pressure generation groove portion 15 can be suppressed. Further, since the depth D4 of the inclined groove portion 516 is shallower than the depth D3 of the fluid introduction groove portion 17, the shear force of the sliding surface 21 is more likely to act on the sealed fluid F in the inclined groove portion 516 than the sealed fluid F in the fluid introduction groove portion 17.

### {Sixth embodiment}

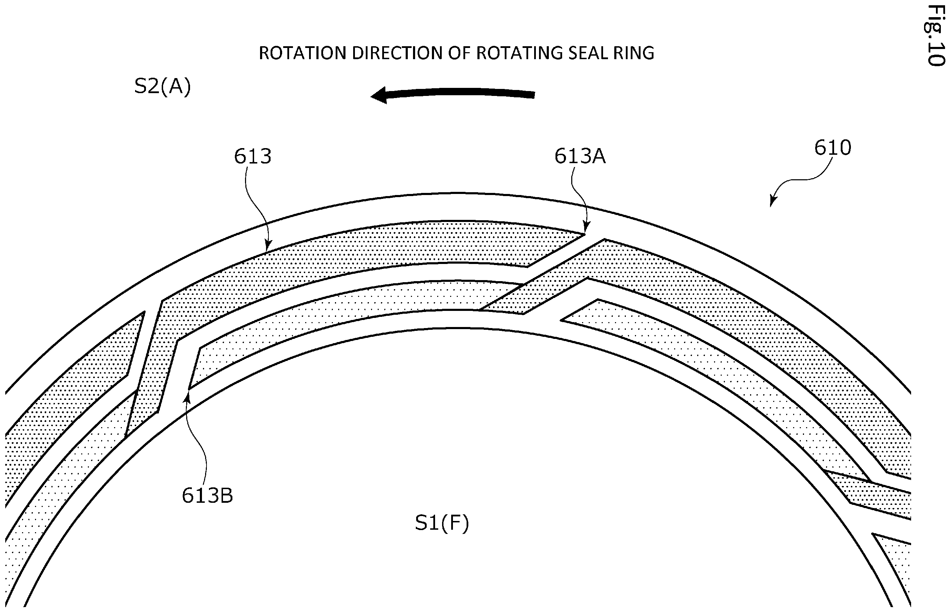

Next, a sliding component according to a sixth embodiment of the present invention will be described with reference to FIG. 10. Additionally, descriptions of configurations that are the same as those of the first embodiment are omitted.

As illustrated in FIG. 10, a stationary seal ring 610 of the sixth embodiment is different from that of the first embodiment in that no fluid introduction groove portion is provided and the other points are the same as those of the first embodiment.

A dynamic pressure generation groove 613 of the stationary seal ring 610 of the sixth embodiment has a dimple shape that does not communicate with the inner space S1 and the outer space S2. Accordingly, the sealed fluid F flowing between the sliding surfaces 11 and 21 is sucked in the vicinity of a starting end portion 613A, moves in the dynamic pressure generation groove 613, and a positive pressure is generated due to the concentration of the sealed fluid in the vicinity of the terminating end portion 613B.

Although the embodiments of the present invention have been described above with reference to the drawings, the specific configuration is not limited to these embodiments and any changes or additions that do not depart from the scope of the present invention are included in the present invention.

For example, in the above-described embodiments, an example has been described in which the sliding component is the mechanical seal for automobiles, but the sliding component may be other mechanical seals for general industrial machines.

Further, in the first to sixth embodiments, an example has been described in which the dynamic pressure generation groove and the fluid introduction groove are provided in the stationary seal ring, but the dynamic pressure generation groove and the fluid introduction groove may be provided in the rotating seal ring. In other words, the sliding component of the present invention may be the stationary seal ring or the rotating seal ring.

Further, in the first to sixth embodiments, it has been described that the sealed fluid space side is the high pressure side and the leakage space side is the low pressure side, but the sealed fluid side and the leakage side may have substantially the same pressure.

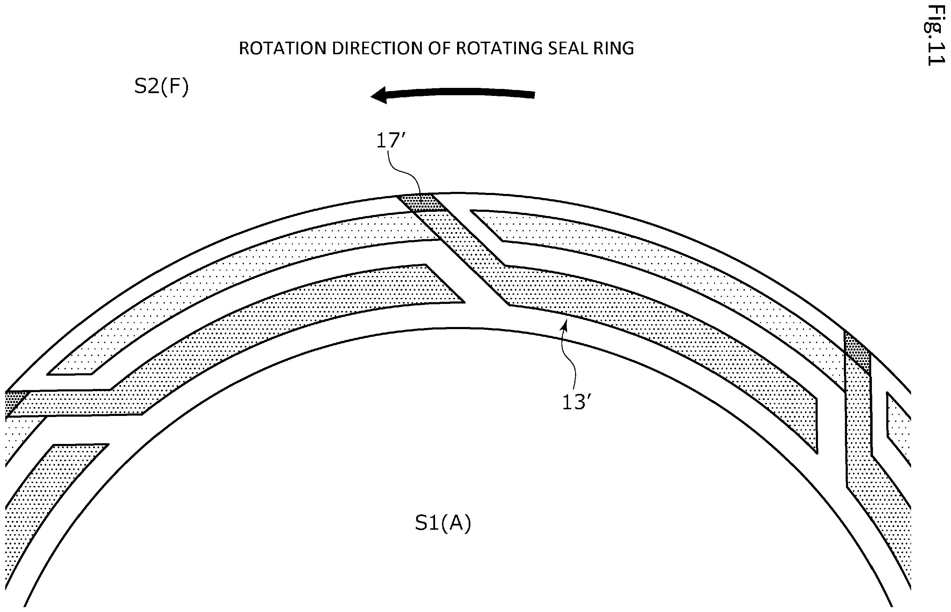

Further, in the first to sixth embodiments, it has been described that the inner radial side is the sealed fluid space side and the outer radial side is the leakage space side, but the outer radial side may be the sealed fluid space side and the inner radial side may be the leakage space side. In this case, it is preferable that the second groove portion be disposed on the outer radial side and the first groove portion be disposed on the inner radial side. For reference, FIG. 11 illustrates Modified Example 1-1 in which the arrangement of a dynamic pressure generation groove 13' and a fluid introduction groove 17' of the first embodiment is opposite to that of the first embodiment in the radial direction.

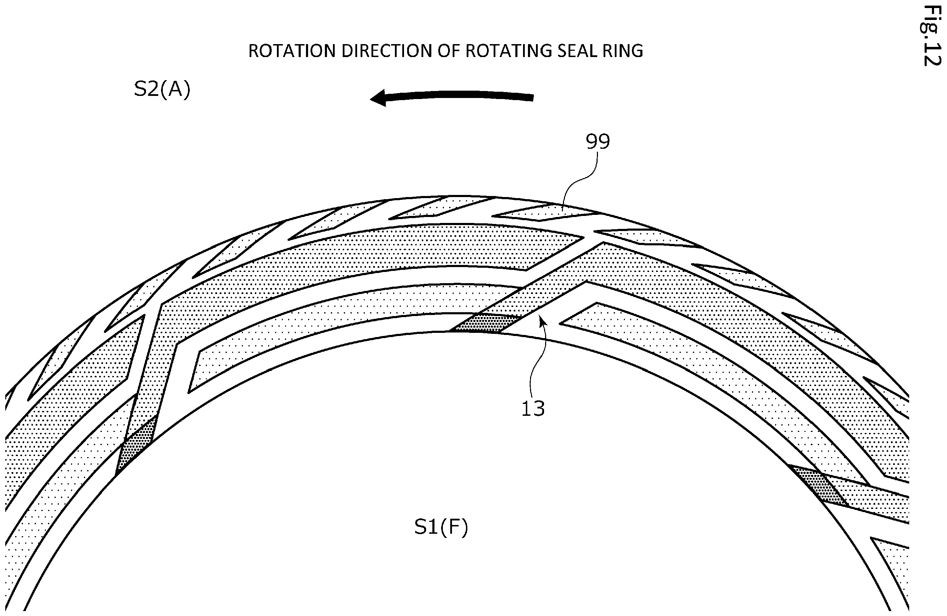

Further, in the first to sixth embodiments, although an embodiment has been exemplified in which one type of dynamic pressure generation groove is provided to generate a positive pressure at the terminating end portion by the sealed fluid, another dynamic pressure generation groove such as a spiral groove may be provided for generating a positive pressure at the terminating end portion by the fluid in the leakage space in addition to the dynamic pressure generation groove. For reference, FIG. 12 illustrates Modified Example 1-2 in which another dynamic pressure generation groove 99 is provided in addition to the dynamic pressure generation groove 13 of the first embodiment.

Further, in the first to sixth embodiments, although an embodiment has been exemplified in which the second groove portion is disposed on the sealed fluid space side and the first groove portion is disposed on the leakage space side, the first groove portion may be disposed on the sealed fluid space side and the second groove portion may be disposed on the leakage space side in relation to the first groove portion if a sufficient negative pressure is generated in the first groove portion.

Further, in the first to sixth embodiments, although an embodiment has been exemplified in which a relative negative pressure is generated at the starting end portion of the dynamic pressure generation groove during the relative rotation, the first groove portion may be formed to be sufficiently deep so that no negative pressure is actively generated during the relative rotation. Even in this case, since the first groove portion is sufficiently deep, the sealed fluid moving toward the leakage side can be collected in the first groove portion.

Further, in the first to sixth embodiments, it has been described that the sealed fluid F is the high-pressure liquid, but the present invention is not limited thereto. For example, the sealed fluid may be a gas, a low-pressure liquid, or a mist mixture of a liquid and a gas.

Further, in the first to sixth embodiments, it has been described that the fluid on the leakage space side is the atmosphere A which is a low-pressure gas, but the present invention is not limited thereto. For example, the fluid may be a liquid, a high-pressure gas, or a mist mixture of a liquid and a gas.

Further, in the first to sixth embodiments, the first groove portion and the second groove portion are not limited to being provided concentrically with the stationary seal ring and may be inclined in the circumferential direction and the radial direction. That is, the first groove portion and the second groove portion may have a component extending in the circumferential direction and may communicate with each other by the inclined groove portion inclined in the circumferential direction and the radial direction.

Further, in the first to sixth embodiments, although an embodiment has been exemplified in which the inclined groove portion is formed to be deeper than at least the portion near the terminating end portion of the second groove portion, the inclined groove portion may be formed to have the same depth as that of the second groove portion.

Further, in the first to fifth embodiments, although an embodiment has been exemplified in which the inclined groove portion is shallower than the fluid introduction groove portion, the inclined groove portion may be formed to have the same depth as that of the fluid introduction groove portion.

Further, in the first to fifth embodiments, although an embodiment has been exemplified in which the fluid introduction groove portion does not directly communicate with the second groove portion, a part of or the entire end opening of the fluid introduction groove portion may directly communicate with the second groove portion.

### {REFERENCE SIGNS LIST}

- 1: Rotating shaft
- 2: Sleeve
- 4: Housing
- 10: Stationary seal ring (sliding component)
- 11: Sliding surface
- 12: Land
- 13: Dynamic pressure generation groove
- 13A: Starting end portion
- 13B: Terminating end portion
- 14: Fluid collection groove portion (first groove portion)
- 15: Positive pressure generation groove portion (second groove portion)
- 16: Inclined groove portion
- 16a: Bottom surface
- 16b,: 16c Side wall surface
- 16d: Inner radial end edge (end wall surface)
- 17: Fluid introduction groove portion
- 20: Rotating seal ring (counterpart sliding component)
- 21: Sliding surface
- 210: Stationary seal ring (sliding component)
- 217: Fluid introduction groove portion
- 310: Stationary seal ring (sliding component)
- 317: Fluid introduction groove portion
- 410: Stationary seal ring (sliding component)
- 413: Dynamic pressure generation groove
- 413A: Starting end portion
- 413B: Terminating end portion
- 413C: Second groove portion
- 414: Fluid collection groove portion (first groove portion)
- 415: Positive pressure generation groove portion (second groove portion)
- 416: Inclined groove portion
- 417: Fluid introduction groove portion
- 418: Deep groove portion (second groove portion)
- 510: Stationary seal ring (sliding component)
- 516: Inclined groove portion
- 610: Stationary seal ring (sliding component)
- 613: Dynamic pressure generation groove
- 613A: Starting end portion
- 613B: Terminating end portion
- A: Atmosphere
- F: Sealed fluid
- S1: Inner space (sealed fluid space)
- S2: Outer space (leakage space)

## Claims

1. A sliding component which is disposed at a relatively rotating position of a rotating machine, slides relatively to a counterpart sliding component, and has a dynamic pressure generation groove provided on a sliding surface thereof, the dynamic pressure generation groove having a starting end portion and a terminating end portion opposed to each other in a circumferential direction,
wherein the dynamic pressure generation groove includes a first groove portion extending circumferentially on a side of the starting end portion and a second groove portion extending circumferentially on a side of the terminating end portion, the first groove portion and the second groove portion being arranged to be displaced in the circumferential direction and a radial direction, and
wherein the first groove portion and the second groove portion communicate with each other through an inclined groove portion obliquely extending from the first groove portion toward a downstream side in a relative rotation direction.

2. The sliding component according to claim 1,
wherein a relative rotation downstream end portion of the first groove portion and a relative rotation upstream end portion of the second groove portion communicate with each other through the inclined groove portion.

3. The sliding component according to claim 1 or 2,
wherein the inclined groove portion is deeper than the second groove portion.

4. The sliding component according to any one of claims 1 to 3, comprising:
a fluid introduction groove portion which clauses the second groove portion and a sealed fluid space to communicate with each other.

5. The sliding component according to claim 4,
wherein the second groove portion communicates with a side wall surface of a downstream end portion of the inclined groove portion, and
wherein the fluid introduction groove portion communicates with an end wall surface of the downstream end portion of the inclined groove portion.

6. The sliding component according to claim 4 or 5,
wherein the fluid introduction groove portion is inclined toward the downstream side in the relative rotation direction.

7. The sliding component according to any one of claims 4 to 6,
wherein the fluid introduction groove portion is deeper than the inclined groove portion.

8. The sliding component according to any one of claims 1 to 7,
wherein a plurality of the dynamic pressure generation grooves are provided, the first groove portion of each of the dynamic pressure generation grooves is disposed to radially overlap on a leakage space side of the terminating end portion of adjacent dynamic pressure generation groove on an upstream side in the relative rotation direction.
